# EUROPÄISCHE PATENTSCHRIFT

(11) **EP 0 925 682 B1**
(45) Veröffentlichungstag und Bekanntmachung des Hinweises auf die Patenterteilung: **27.06.2001**
(21) Anmeldenummer: 97918905.7
(22) Anmeldetag: 25.08.1997
(51) Int. Cl.: H04N 5/14

(54) **VERFAHREN ZUR DETEKTION VON KANTEN IN EINEM BILDSIGNAL**
PROCESS FOR DETECTING EDGES IN AN IMAGE SIGNAL
PROCEDE DE DETECTION D'ARETES DANS UN SIGNAL VIDEO

(30) Priorität: 11.09.1996 DE 19636949
(43) Veröffentlichungstag der Anmeldung: 30.06.1999
(73) Patentinhaber: Infineon Technologies AG, 81669 München (DE)
(72) Erfinder: AMER, Aishy, D-44227 Dortmund (DE); REICHERT, Steffen, D-40882 Ratingen (DE)
(86) Internationale Anmeldenummer: DE9701850
(87) Internationale Veröffentlichungsnummer: WO9811717

(56) Entgegenhaltungen:
- WO-A-95/15537
- US-A- 4 477 926
- US-A- 4 481 664
- US-A- 5 438 636
- US-A- 5 452 367
- US-A- 5 537 485

## Beschreibung

Die Erfindung betrifft ein Verfahren zur Detektion von Kanten in einem Bildsignal.

In der Bildverarbeitung, inbesondere der Fernsehsignalverarbeitung, ist die Detektion von Kanten für eine Vielzahl von digitalen Signalverarbeitungsverfahren erforderlich. Beispielsweise wird die Kantendetektion angewandt zur Objekterkennung, zur Bewegungsschätzung, der Bildqualitätsverbesserung, indem beispielsweise Kantenversteilerung oder Rauschreduktion durchgeführt wird, oder zur Flimmerbefreiung. Die Qualität dieser Signalverarbeitungsverfahren hängt wesentlich von der Leistungsfähigkeit der Kantendetektion im Kantendetektor ab. Insbesondere ist wünschenswert, daß die Kanten möglichst rauschunempfindlich und positionsgenau festgestellt werden.

Herkömmliche Kantendetektoren in der Fernsehsignalverarbeitung arbeiten nach dem Prinzip der Gradientenbildung. Hierzu wird ein Helligkeitssprung in einem Bild grundsätzlich durch Differenzenbildung ermittelt. Bei Laplace-Verfahren wird die zweite Ableitung des Gradienten verwendet. Darüber hinaus sind verschiedene Kombination dieser Verfahren gegebenenfalls unter Einbeziehung von Faltungsoperationen und Gewichtung längsverschiedener Richtungen möglich. Problematisch bei diesen Verfahren ist die aufgrund der Differenzbildung erhöhte Rauschempfindlichkeit. Die ermittelten Kanten können mehrere Bildpunkte breit sein, was zu Positionsungenauigkeit führt. An Verdeckungsstellen erfolgt keine effiziente Kantenermittlung. Aufgrund der Bildung von Ableitungen ist ein hoher Rechenaufwand erforderlich, ebenso führen breite Kanten zu erhöhtem Rechenaufwand.

US-A-4 477 926 beschreibt ein Verfahren zur Kantendetektion durch morphologische Erosion.

Die Aufgabe der Erfindung besteht darin, ein Verfahren zur Detektion von Kanten in einem Bild anzugeben, das obige Nachteile vermeidet. Insbesondere soll das Verfahren möglichst rauschunempfindlich sein und außerdem positionsgenaue Kanten aufweisen.

Erfindungsgemäß wird diese Aufgabe durch ein Verfahren nach den Merkmalen des Patentanspruchs 1 gelöst.

Das erfindungsgemäße Kantendetektionsverfahren unter Anwendung morphologischer Erosion liefert - außer an Verdeckungsstellen - nur Kanten, die einen einzigen Bildpunkt breit sind. Die Kanten sind positionsgenau. Es werden weitgehend geschlossene Kanten detektiert, so daß z. B. für eine nachfolgende Objekterkennung gute Ergebnisse sichergestellt werden können. Die Erosionsvorschrift ist mit einfachen Schaltungsmitteln, die mathematischen Grundoperatoren entsprechen, ausführbar, so daß im Vergleich zu gradienten- oder laplacebasierten Verfahren ein wesentlich geringerer Rechenaufwand erforderlich ist. Mittels einer anschließenden grauwertbasierten morphologischen Erosion können auch durch die Verdekkung zwischen zwei Objekten vorliegende Doppelkanten weitgehend vollständig erkannt werden. Letztgenannte Weiterbildung liefert an Verdeckungsstellen Kanten mit meist zwei Bildpunkten Breite.

Diese und andere vorteilhafte Weiterbildungen der Erfindung sind in den abhängigen Ansprüchen angegeben.

Nachfolgend wird die Erfindung anhand des in der Zeichnung dargestellten Ausführungsbeispiels näher erläutert. Es zeigen:
- Figur 1: den prinzipiellen Ablauf des Verfahrens der binären Kantendetektion,
- Figur 2: verschiedene Schritte während der binären Erosion,
- Figur 3: den prinzipiellen Verfahrensablauf mit der grauwertbasierten Erosion und
- Figur 4: verschiedene Schritte während einer grauwertbasierten Erosion.

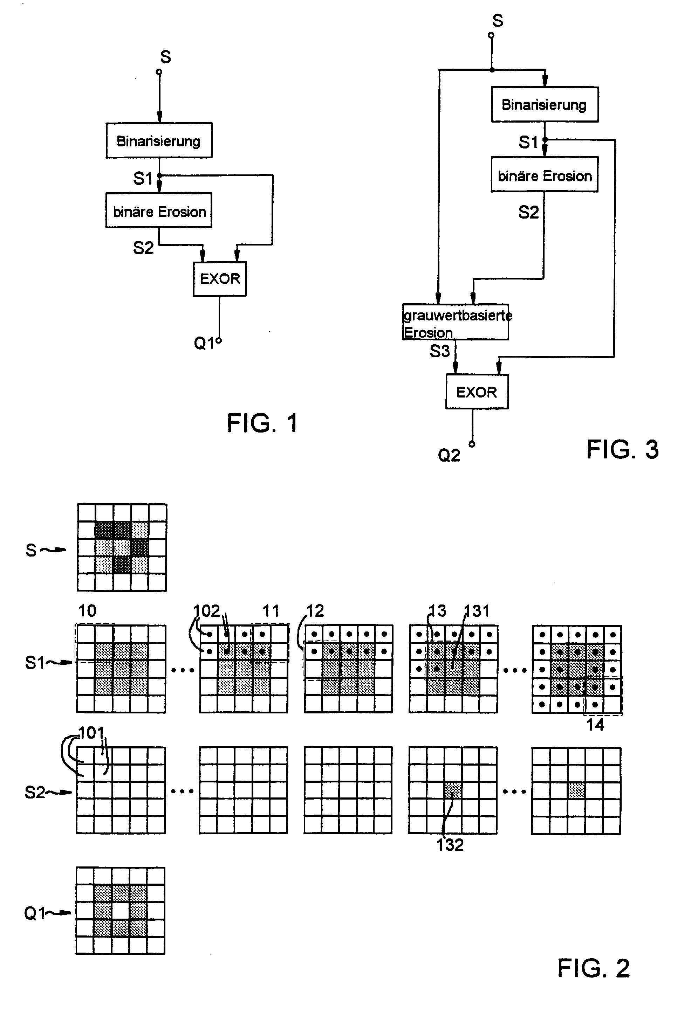

Dem Verfahren gemäß Figur 1 wird eingangsseitig ein Bildsignal S zugeführt, das ein in Zeilen aufgeteiltes Zeilensprung- oder progressives Bild sein kann. Die einzelnen Bildpunkte enthalten jeweils einen Helligkeitswert. Zuerst wird die Helligkeitsinformation des Eingangsbilds reduziert auf ein Binärbild S1, so daß nur gesetzte und nicht gesetzte Bildpunkte vorliegen. Gesetzte Bildpunkte gehören zum Objekt, nicht gesetzte Bildpunkte zum Hintergrund. Das Binärbild wird gemäß einer Erosionsvorschrift erodiert, das heißt geschrumpft, so daß ein binäres, erodiertes Zwischenbild S2 entsteht. Das Zwischenbild S2 wird mit dem eingangsseitigen Binärbild S1 verglichen, beispielsweise mittels einer Exclusiv-ODER-Verknüpfung oder einer Differenzbildung, woraus sich das nur die Kanten enthaltende Ausgangsbild Q1 ergibt. Die Kante weist eine Breite von einem Bildpunkt auf.

Zur Erkennung von Kanten auch innerhalb von binären Segmenten wird eine grauwertbasierte Erosion gemäß Figur 3 durchgeführt. Hierzu wird zusätzlich eine Erosion auf das bereits binär erodierte Binärbild S2 angewandt und zwar an denjenigen Stellen, an denen im eingangsseitigen Grauwertbild S Grauwertsprünge einer vorgegebenen Größe feststellbar sind. Durch Vergleich zwischen dem Binärbild S1 und dem grauwertbasierten Erosionsbild S3, beispielsweise durch eine Exclusiv-ODER-Verknüpfung oder durch Differenzbildung, wird das Ausgangsbild Q2 erzeugt, das die äußeren Kanten und zusätzlich aufgrund von Verdeckung zwischen Objekten vorliegende Kanten enthält.

Nachfolgend wird das Verfahren im Detail beschrieben. Zur Reduktion der Eingangsbildinformation auf ein Binärbild wird jeder Bildpunkt mit einem Schwellwert verglichen. Es ist zweckmäßig, für die Bilder der im Eingangssignal S enthaltenen Bildfolge eine dynamische Schwellwertanpassung vorzunehmen. Hierzu wird für jedes Bild eine eigene Grauwertschwelle bestimmt, um daraufhin Bildbereiche festzustellen, in denen das Grauwertniveau oberhalb oder unterhalb dieser Schwelle liegt. Die Grauwertschwelle wird während der Bildfolge angepaßt, vorzugsweise für jedes Bild eigens berechnet.

Innerhalb des Bildes wird die Häufigkeit verschiedener Grauwerte ermittelt. Zweckmäßigerweise erfolgt dies für eine auf die Bildinhalte angepaßte Schwellwertbestimmung getrennt für einzelne Blöcke, in die das Bild aufgeteilt ist. Der verfügbare Grauwertebereich wird für jede Verteilung innerhalb eines Blocks in eine Anzahl von beispielsweise fünf gleich großen Bereichen aufgeteilt. Innerhalb jedes Bereichs wird der am häufigsten vorkommende Grauwert dieses Bereichs ermittelt. Darüber hinaus wird in jedem Block ein lokaler Durchschnittsgrauwert aus den Häufigkeiten aller Grauwerte berechnet. Der Schwellwert für das gesamte Bild wird als Durchschnittswert aus den für jeden Block ermittelten Durchschnittsgrauwerten sowie den in jedem Block ermittelten am häufigsten vorkommenden Grauwerten berechnet. Es hat sich gezeigt, daß dieser "gemischte" Durchschnittsgrauwert eine gute Anpassung auf kleine, lokale Helligkeits- und Kontrastschwankungen im Bild bietet. Der Schwellwert paßt sich an den in realen Bildfolgen auftretenden Helligkeitsschwankungen an, so daß ein gutes Ergebnis der Binarisierurng und der nachfolgenden Kantendetektion erreicht wird.

Zur binären Erosion wird ein Strukturelement 10 (Figur 2) schrittweise über das Binärbild S1 geführt, wobei die im Strukturelement liegenden Bildpunkte gemäß einer Erosionsvorschrift umgesetzt werden in entsprechende Bildpunkte des Zwischenbilds S2. Entsprechende Bildpunkte bedeutet, daß diese Bildpunkte des Zwischenbilds S2 lagegleich den vom Strukturelement des Binärbilds umfaßten Bildpunkten sind. Das Strukturelement ist im beschriebenen Ausführungsbeispiel ein Quadrat mit vier Bildpunkten, die Schrittweite beträgt jeweils einen Bildpunkt in horizontale Richtung; am Zeilenende springt das Quadratelement auf den Zeilenbeginn der nächstfolgenden Zeile. Die Erosionsvorschrift für die Bildpunkte innerhalb des Strukturelements lautet: "Wenn in einem Strukturelement nicht alle Bildpunkte gesetzt sind, so werden alle diese Bildpunkte erodiert, d.h. zurückgesetzt. Wenn alle Bildpunkte innerhalb des Strukturelements gesetzt sind, so werden lediglich diejenigen Bildpunkte gesetzt, die vorher nicht bereits erodiert wurden". Zweckmäßigerweise werden im ersten Schritt die erodierten Bildpunkte entweder im Binärbild S1 oder im Zwischenbild S2 markiert und im zweiten Schritt nur diejenigen Bildpunkte gesetzt, die nicht als erodiert markiert sind. Dies bedeutet, die Erosionsvorschrift ist nicht rekursiv.

Gesetzte Bildpunkte sind dabei solche, die zu einem Objekt gehören, nicht gesetzte bzw. rückgesetzte Bildpunkte sind solche Bildpunkte, die zum Hintergrund gehören. Das Strukturelement ist relativ klein und die Erosionsvorschrift kann mit grundlegenden logischen Operationen realisiert werden. Der erforderliche Rechenaufwand ist deshalb gering.

Das binäre Kantendetektionsverfahren nach Figur 1 wird anhand des konkreten Ausführungsbeispiels in Figur 2 noch einmal schrittweise erläutert. Das eingangsseitige Bild S umfaßt jeweils fünf Bildpunkte in horizontaler und vertikaler Richtung, wobei die mittleren Bildpunkte Grauwerte enthalten, die einem Objekt zuordenbar sind, während die randseitigen Bildpunkte dem Hintergrund zuordenbar sind. Die mit S1 bezeichnete Zeile zeigt das bereits binarisierte Bild in verschiedenen Verarbeitungsschritten. Die Zeile S2 zeigt das binär erodierte Bild zu den in der Zeile S1 dargestellten Phasen der Verarbeitung. Das Bild Q1 ist das Ausgangsbild, das die Kanteninformation enthält. Das vier Bildpunkte umfassende Strukturelement wird bildpunktweise über das Binärbild S1 geführt. In Figur 2 sind fünf verschiedene Stellungen 10...14 des Strukturelements gezeigt. In der Ausgangsstellung 10 wird anhand der Erosionsregel festgestellt, daß nicht alle Bildpunkte im Strukturelement gesetzt sind. Somit werden die dieser Stellung des Strukturelements entsprechenden Bildpunkte 101 im binär erodierten Bild S2 dieser Verarbeitungsphase auf den Hintergrundgrauwert erodiert, d.h. zurückgesetzt. Im Binärbild S1 werden diese Punkte als erodiert gekennzeichnet (Bezugszeichen 102). Während des schrittweisen Laufs über die gesamte erste Zeile werden alle Bildpunkte erodiert. In der Figur 2 ist hierzu beispielhaft die Stellung 11 des Strukturelements am Ende der Zeile dargestellt. Ebenso werden in der ersten Stellung 12 des Strukturelements in der zweiten Zeile alle Bildpunkte erodiert. Bis hierhin sind die bereits verarbeiteten Bildpunkte des binär erodierten Bilds S2 allesamt erodiert. In der Stellung 13 des Strukturelements wird gemäß der Erosionsregel festgestellt, daß alle Bildpunkte des Quadratelements gesetzt sind, d.h. dem Objekt angehören; es werden lediglich diejenigen Bildpunkte gesetzt, die vorher nicht erodiert worden sind, d.h. nicht im Bild S1 oder alternativ im Bild S2 (nicht dargestellt) als erodiert markiert sind. Dies ist der Bildpunkt 131 im Binärbild S1 dieser Darstellungsphase, der im erodierten Bild S2 als Bildpunkt 132 gesetzt wird. Mit Fortschreiten des Verfahrens ergibt sich gemäß der Erosionsregel wiederum, daß alle Bildpunkte außer Bildpunkt 131 auf den Hintergrundgrauwert zurückgesetzt werden. Die Stellung 14 des Strukturelements zeigt dessen letzte Stellung im Bildausschnitt. Es verbleibt als binär erodiertes Bild S2 nach der binären Erosion ein Bild, in dem nur der Bildpunkt an der Stelle 132 gesetzt ist. Durch Differenzbildung zwischen dem eingangsseitigen Binärbild und dem vollständigen erodierten Bild ergibt sich das Bild Q1. Dieses enthält den Rand des Binärobjekts, wobei die Kante einen Bildpunkt breit ist.

Mit der bisher beschriebenen auf binärer Erosion beruhenden Kantendetektion können nur Kanten am Rand von binären Segmenten festgestellt werden. Kanten, die innerhalb von binären Segmenten liegen, werden nicht detektiert, sind aber für eine Erkennung von Verdeckungen von Bedeutung. Hierzu wird gemäß Figur 3 zusätzlich eine grauwertbasierte Erosion durchgeführt, indem auch innerhalb von binären Segmenten Punkte erodiert werden, an denen Verdeckungen festgestellt werden. Hierzu wird eine Grauwertdifferenz zwischen benachbarten Bildpunkten des Strukturelements ermittelt und diese mit einem Schwellwert verglichen. Eine über dem Schwellwert liegende Grauwertedifferenz weist darauf hin, daß durch das Strukturelement hindurch eine Kante verläuft. Die Bestimmung der Schwelle ist anwendungsabhängig. Bei einem Grauwertebereich von beispielsweise 0...255 hat sich eine Grauwertschwelle von 20 bis 30 als zweckmäßig erwiesen.

Das Strukturelement wird synchron über das bereits erodierte Zwischenbild S2 geführt sowie über das grauwertige Eingangsbild S. Dann wird ermittelt, ob innerhalb des Strukturelements zwischen benachbarten Bildpunkten eine über der vorgegebenen Grauwertschwelle liegende Grauwertdifferenz vorliegt, so daß angenommen werden kann, daß durch das Strukturelement ein verdeckte Kante läuft. Zweckmäßigerweise wird diese Auswertung nur innerhalb eines Objekts durchgeführt, d.h. wenn alle vier dem Strukturelement entsprechenden Bildpunkte im Binärbild gesetzt sind. Die Grauwertedifferenz wird dabei aus den Bildpunkten des grauwertigen Eingangsbilds S ermittelt. Zweckmäßigerweise wird aus mehreren Grauwertedifferenzen zwischen benachbarten Bildpunkten ein Mittelwert berechnet. Hierzu wird innerhalb des dem Strukturelement entsprechenden Bildpunkten zwischen den horizontal benachbart liegenden Bildpunkten jeweils die Grauwertdifferenz berechnet, daraus ein erster Durchschnittsgrauwert. Nachfolgend wird aus den vertikal benachbart liegenden Bildpunkten des Strukturelements je eine Grauwertdifferenz berechnet, daraus ein zweiter Durchschnittsgrauwert. Aus den ersten und zweiten Durchschnittsgrauwerten wird eine Gesamtdifferenz der Durchschnittsgrauwerte gebildet, die mit der vorgegebenen Schwelle verglichen wird. Liegt diese Differenz oberhalb der vorgegebenen Grauwertschwelle, verläuft die Grauwertkante im Strukturelement horizontal bzw. vertikal. Falls kein horizontaler oder vertikaler Kantenverlauf gefunden wurde, werden Grauwertedifferenzen zwischen den diagonal im Strukturelement benachbart liegenden Bildpunkten berechnet. Aus diesen beiden Differenzen wird wiederum eine Gesamtdifferenz gebildet. Wenn diese Differenz über dem vorgegebenen Schwellwert liegt, bedeutet dies, daß eine Eckenkonstellation vorliegt, d.h. daß nur ein Bildpunkt im Strukturelement gesetzt ist oder nur ein Bildpunkt zurückgesetzt ist. Die Erosionsregel der grauwertbasierten Erosion lautet nun: "Wenn mindestens einer der Schwellwertvergleiche eine über dem Schwellwert liegende Gesamtdifferenz liefert, werden dem Strukturelement entsprechende Bildpunkte im bereits binär erodierten Bild erodiert, das heißt rückgesetzt auf den Hintergrundgrauwert. Ansonsten bleiben die Bildpunkte unverändert erhalten". Wie in Figur 3 dargestellt wird anschließend an die binäre und grauwertbasierte Erosion das Bild S3 mit dem binarisierten Bild S1 durch Exklusiv-ODER-Verknüpfung oder Differenzbildung verknüpft.

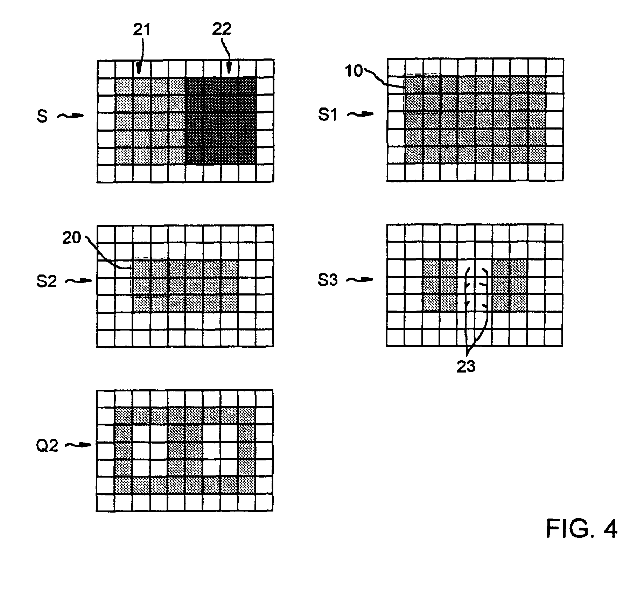

In der Figur 4 sind verschiedene Bildinhälte der in Figur 3 auftretenden Bildsignale jeweils nach Abarbeitung der dort gezeigten Verfahrensblöcke dargestellt. Das Verfahren der grauwertbasierten Erosion geht aus von dem Eingangsbildsignal S, das randseitig einen Hintergrund mit einem Bildpunkt Breite aufweist und zwei aneinanderstoßende Objekte 21, 22 unterschiedlichen Grauwerts. Durch Binarisierung wird aus dem grauwertigen Eingangsbild S das Binärbild S1 erhalten, welches eine die Objekte 21, 22 umfassende Fläche aus gesetzten Bildpunkten und einen Hintergrund aus nicht gesetzten Bildpunkten am Rand enthält. Aus dem Binärbild S1 wird durch binäre Erosion mittels des Strukturelements 10, von dem in Figur 4 eine Stellung angedeutet ist, das binär erodierte Bild S2 erhalten. Dessen Objekt weist eine gegenüber der aus gesetzten Bildpunkten gebildeten Fläche des Binärbilds S1 eine um einen Bildpunkt verringerte Fläche von gesetzten Bildpunkten auf. Mittels eines weiteren Strukturelements 20, das für eine Stellung im binär erodierten Bild S2 dargestellt ist, wird unter Feststellung eines vertikal verlaufenden Grauwertsprungs zwischen den Objekten 21, 22 im Eingangsbild S aus dem binär erodierten Bild S2 das grauwertbasiert erodierte Bild S3 erhalten. Im grauwertbasiert erodierten Bild S3 sind gegenüber dem binär erodierten Bild S2 die Bildpunkte 23 an der vertikalen Grauwertkante zwischen den Objekten 21, 22 innerhalb des bereits binär erodierten Objekts auf den Hintergrundgrauwert zurückgesetzt. Durch Differenzbildung oder Exclusiv-ODER-Verknüpfung zwischen dem grauwertbasiert erodierten Bild S3 und dem Binärbild S1 wird das Ausgangsbild Q2 erhalten. Dieses enthält sowohl die äußeren Kanten der Objekte 21, 22 sowie die durch die Verdeckung zwischen den Objekten 21, 22 vorliegende Kante. Die äußere Kante ist einen Bildpunkt breit, die Verdeckungskante zwei Bildpunkte breit.

Die wie oben beschrieben detektierten Kanten werden in kantenbasierten Signalverarbeitungsverfahren weiterverarbeitet. Beispielsweise werden die Konturpunkte miteinander verkettet, so daß Objekte gebildet werden. Unter Berücksichtigung der Objektinformation wird beispielsweise in einem Bewegungsschätzer oder Bewegungsdetektor benutzt, um die Genauigkeit der Bewegungsvektoren zu erhöhen. Erfahrungsgemäß sind aus Bildpunktdifferenzen ermittelte Bewegungsvektoren am Objektrand mit Ungenauigkeiten behaftet. Mittels der Objekterkennung wird deshalb aus den einzelnen Bewegungsvektoren der Bildpunkte eines wie oben beschriebenen Objekts ein Majoritätsbewegungsvektor ermittelt und die davon abweichenden potentiell fehlerhaften Bewegungsvektoren werden durch den Majoritätsbewegungsvektor ersetzt.

Das erfindungsgemäße Verfahren zur Kantendetektion liefert hierzu positionsgenaue, lückenfreie, einen Bildpunkt breite Kanten am Objektrand bei geringer Rauschunempfindlichkeit und guter Detektionszuverlässigkeit. Doppelkanten werden an Stellen geliefert, an denen sich Objekte verdecken. Diese Ergebnisse werden mit dem zu verwendenden kleinen Strukturelement sowie der einfachen Erosionsvorschrift mit relativ geringem Rechenaufwand gegenüber herkömmlichen Lösungen erreicht.

## Patentansprüche

1. Verfahren zur Detektion von Kanten in einem Bildsignal mittels morphologischer Erosion, bei dem ein Binärbild (S1) mit gesetzten und zurückgesetzten Bildpunkten aus einem Eingangsbild (S) erzeugt wird, von einem Strukturelement (10, ..., 14) umfaßte Bildpunkte des Binärbilds (S1) verarbeitet werden zu lagemäßig entsprechenden Bildpunkten eines Zwischenbilds (S2) gemäß einer Erosionsvorschrift, wobei das Strukturelement schrittweise innerhalb des Binärbildes (S1) bewegt wird und aus dem Binärbild (S1) und dem Zwischenbild (S2) ein die Kanten enthaltendes Differenzbild (Q1) gebildet wird,
**dadurch gekennzeichnet**, daß
gemäß der Erosionsvorschrift die dem Strukturelement des Binärbilds (S1) entsprechenden Bildpunkte des Zwischenbilds (S2) zurückgesetzt werden, wenn mindestens einer der vom Strukturelement des Binärbilds (S1) umfaßten Bildpunkte nicht gesetzt ist, und daß diejenigen dem Strukturelement (10, ..., 14) des Binärbilds (S1) entsprechenden Bildpunkte des Zwischenbilds (S2), die noch nicht zurückgesetzt worden sind, gesetzt werden, wenn die vom Strukturelement des Binärbilds (S1) umfaßten Bildpunkte gesetzt sind.

2. Verfahren nach Anspruch 1,
**dadurch gekennzeichnet**, daß
zur Ermittlung des Binärbilds (S1) der jeweilige Helligkeitswert der Bildpunkt des Eingangsbilds (S) mit einem Schwellwert verglichen wird und daß der Schwellwert bildweise aus dem Bildinhalt ermittelt wird.

3. Verfahren nach Anspruch 2,
**dadurch gekennzeichnet**, daß
der Schwellwert für jedes Eingangsbild (S) aus blockweise für das Bild ermittelten Teilschwellwerten und einer Durchschnittsberechnung aus diesen Teilschwellwerten ermittelt wird.

4. Verfahren nach Anspruch 3,
**dadurch gekennzeichnet**, daß
zur Ermittlung eines der Teilschwellwerte für einen der Blökke eines Bildes die Häufigkeit verschiedener Grauwerte innerhalb eines Blockes ermittelt wird und eine Durchschnittsberechnung aus mehreren Häufigkeitswerten durchgeführt wird.

5. Verfahren nach einem der Ansprüche 1 bis 4,
**dadurch gekennzeichnet**, daß
von einem weiteren Strukturelement (20) umfaßte Bildpunkte des Zwischenbilds (S2) verarbeitet werden zu dem weiteren Strukturelement (20) entsprechenden Bildpunkten eines weiteren Zwischenbilds (S3) gemäß einer weiteren Erosionsvorschrift, wobei das weitere Strukturelement (20) innerhalb des Zwischenbilds (S2) schrittweise bewegt wird, daß gemäß der weiteren Erosionsvorschrift die dem weiteren Strukturelement (20) des Zwischenbilds (S2) entsprechenden Bildpunkte des weiteren Zwischenbilds (S3) zurückgesetzt werden, wenn eine Vergleichsbedingung bezüglich einer Helligkeitswertedifferenz für die vom weiteren Strukturelement (20) des Eingangsbilds (S) umfaßten Bildpunkte erfüllt ist und daß aus dem Binärbild (S1) und dem weiteren Zwischenbild (S3) ein die Kanten enthaltendes Differenzbild (Q2) gebildet wird.

6. Verfahren nach Anspruch 5,
**dadurch gekennzeichnet**, daß
die Helligkeitswertedifferenz berechnet wird aus den horizontal und vertikal benachbarten Bildpunkten des Eingangsbilds (S), die dem weiteren Strukturelement (20) im Zwischenbild (S2) entsprechen.

7. Verfahren nach einem der vorhergehenden Ansprüche 1 bis 6,
**dadurch gekennzeichnet**, daß
jedes der Strukturelemente (10, ..., 14; 20) vier unmittelbar nebeneinanderliegende Bildpunkte umfaßt.

## Claims

1. Method for detecting edges in an image signal by means of morphological erosion, in which a binary image. (S1) with set and reset pixels is generated from- an input image (S), pixels of the binary image (S1) which are encompassed by a structure element (10, ..., 14) are processed to form positionally corresponding pixels of an intermediate image (S2) in accordance with an erosion specification, the structure element being moved in a step-by-step manner within the binary image (S1) and a difference image (Q1) containing the edges being formed from the binary image (S1) and the intermediate image (S2),
characterized in that
in accordance with the erosion specification, the pixels of the intermediate image (S2) which correspond to the structure element of the binary image (S1) are recessed if at least one of the pixels encompassed by the structure element of the binary image (S1) is not set, and in that those pixels of the intermediate image (S2) which correspond to the structure element (10, ..., 14) of the binary image (S1) and have not yet been reset are set if the pixels encompassed by the structure element of the binary image (S1) are set.

2. Method according to Claim 1,
characterized in that
in order to determine the binary image (S1), the respective luminosity value of the pixel of the input image (S) is compared with a threshold value, and in that the threshold value is determined in an image-by-image manner from the image content.

3. Method according to Claim 2,
characterized in that
the threshold value for each input image (S) is determined from partial threshold values, which are determined in a block-by-block manner for the image, and a calculation of the average of these partial threshold values.

4. Method according to Claim 3,
characterized in that
in order to determine one of the partial threshold values for one of the blocks of an image, the frequency of various grey-scale values within a block is determined and a calculation of the average of a plurality of frequency values is carried out.

5. Method according to one of Claims 1 to 4,
characterized in that
pixels of the intermediate image (S2) which are encompassed by a further structure element (20) are processed to form pixels of a further intermediate image (S3) which correspond to the further structure element (20), in accordance with a further erosion specification, the further structure element (20) being moved in a step-by-step manner within the intermediate image (2), in that, in accordance with the further erosion specification, the pixels of the further intermediate image (S3) which correspond to the further structure element (20) of the intermediate image (S2) are reset if a comparison condition with regard to a luminosity value difference is fulfilled for the pixels encompassed by the further structure element (20) of the input image (S) and in that a difference image (Q2) containing the edges is formed from the binary image (31) and the further intermediate image (S3).

6. Method according to Claim 5, characterized in that the luminosity value difference is calculated from the horizontally and vertically adjacent pixels of the input image (S) which correspond to the further structure element (20) in the intermediate image (S2).

7. Method according to one of the preceding Claims 1 to 6,
characterized in that
each of the structure elements (10, ..., 14; 20) encompasses four pixels situated directly next to one another.

## Revendications

1. Procédé de détection d'arêtes dans un signal d'image au moyen de l'érosion morphologique, dans lequel on produit une image (S1) binaire comportant des points d'image qui sont mis et remis à l'état initial est produite à partir d'une image (S) d'entrée, dans lequel des points d'image de l'image (S1) binaire entourés d'un élément (10, ..., 14) de structure sont traités pour donner des points d'image, correspondant du point de vue de la position, d'une image (S2) intermédiaire, suivant une prescription d'érosion, l'élément de structure étant déplacé pas à pas à l'intérieur de l'image (S1) binaire et une image (Q1) de différence contenant les arêtes étant formée à partir de l'image (S1) binaire et de l'image (S2) intermédiaire, caractérisé en ce que, suivant la prescription d'érosion, les points d'image de l'image (S2) intermédiaire correspondant à l'élément de structure de l'image (S1) binaire sont remis à l'état initial si au moins l'un des points d'image réunis par l'élément de structure de l'image (S1) binaire n'est pas mis et en ce que les points d'image de l'image (S2) intermédiaire correspondant à l'élément (10, .., 14) de structure de l'image (S1) binaire et qui n'ont pas encore été remis à l'état initial sont mis si les points d'image entourés de l'élément de structure de l'image (S1) binaire sont mis.

2. Procédé suivant la revendication 1, caractérisé en ce que, pour déterminer l'image (S1) binaire, on compare la valeur de brillance associée du point d'image de l'image (S) d'entrée à une valeur seuil et en ce que l'on détermine la valeur seuil par image à partir du contenu d'image.

3. Procédé suivant la revendication 2, caractérisé en ce que l'on détermine la valeur seuil pour chaque image (S) d'entrée à partir de sous-valeurs seuils déterminées par blocs pour l'image et d'un calcul de moyenne à partir de ces sous-valeurs seuils.

4. Procédé suivant la revendication 3, caractérisé en ce que; pour déterminer l'une des sous-valeurs seuils pour l'un des blocs d'une image, on détermine la fréquence de diverses valeurs de gris à l'intérieur d'un bloc et on effectue un calcul de moyenne à partir de plusieurs valeurs de fréquence.

5. Procédé suivant l'une des revendications 1 à 4, caractérisé en ce que des points d'image de l'image (S2) intermédiaire entourés d'un élément (20) de structure supplémentaire sont traités pour donner des points d'image d'une, image (S3) intermédiaire supplémentaire correspondant à l'élément (20) de structure supplémentaire, suivant une prescription d'érosion supplémentaire, l'élément (20) de structure supplémentaire étant déplacé pas à pas à l'intérieur de l'image (S2) intermédiaire, en ce que, suivant la prescription d'érosion supplémentaire, les points d'image de l'image (S3) intermédiaire supplémentaire correspondant à l'élément (20) de structure supplémentaire de l'image (S2) intermédiaire sont remis à l'état initial si une condition de comparaison concernant une différence de valeur de brillance pour les points d'image entourés de l'élément (20) de structure supplémentaire de l'image (S) d'entrée est satisfaite et en ce qu'il est formé à partir de l'image (S1) binaire et de l'image (S3) intermédiaire supplémentaire une image (Q2) de différence contenant les arêtes.

6. Procédé suivant la revendication 5, caractérisé en ce que la différence de valeur de brillance est calculée à partir des points d'image de l'image (S) d'entrée qui sont voisins horizontalement et verticalement et qui correspondent à l'élément (20) de structure supplémentaire dans l'image (S2) intermédiaire.

7. Procédé suivant l'une des revendications 1 à 6 précédentes, caractérisé en ce que chacun des éléments (10, ..., 14 ; 20) de structure comprend quatre points d'image situés directement côte à côte.
